# EUROPÄISCHE PATENTANMELDUNG

(11) **EP 1 249 991 A2**
(43) Veröffentlichungstag der Anmeldung: **16.10.2002**
(21) Anmeldenummer: 02100355.3
(22) Anmeldetag: 09.04.2002
(51) Int. Cl.: H04M 3/493

(54) **Verfahren zum Betrieb eines automatischen Fernsprech-Auskunftssystems**

(30) Priorität: 11.04.2001 DE 10118038
(71) Anmelder: Philips Corporate Intellectual Property GmbH, 20099 Hamburg (DE); Koninklijke Philips Electronics N.V., 5621 BA Eindhoven (NL)
(72) Erfinder: Hodam, Henrik, 52066 Aachen (DE); Lenke, Nils, 52066 Aachen (DE)
(74) Vertreter: Volmer, Georg, Dipl.-Ing.

(57) **Zusammenfassung**

Beschrieben wird ein Verfahren zum Betrieb eines automatischen Fernsprech-Auskunftssystems, bei welchem ein Nutzer mittels eines mit dem System verbundenen Endgeräts (1) Suchparameter an das System übermittelt. Das System sucht dann anhand der Suchparameter in einer Datenbank (3) des Systems gespeicherte Teilnehmerdaten (TD) eines vom Nutzer gesuchten Teilnehmers und gibt entsprechende, in der Datenbank (3) gefundene Teilnehmerdaten (TD) an den Nutzer aus Einem jeden in der Datenbank (3) gespeicherten Teilnehmerdatensatz (TDS) jedes Teilnehmers ist ein vom jeweiligen Teilnehmer aus einer Mehrzahl von Prioritätswerten auswählbarer Prioritätswert (P) zugeordnet.
Die Reihenfolge der Ausgabe der Teilnehmerdaten (TD) der in der Datenbank (3) gefundenen Teilnehmer erfolgt in Abhängigkeit von den jeweiligen Teilnehmerdatensätzen (TDS) zugeordneten Prioritätswerten (P). Darüber hinaus wird ein entsprechendes automatisches Fernsprech-Auskunftssystem beansprucht.

## Beschreibung

Die Erfindung betrifft ein Verfahren zum Betrieb eines automatischen Fernsprech-Auskunftssystems, bei welchem anhand von Suchparametern, die mittels eines Endgeräts eines Nutzers an das System übermittelt werden, Teilnehmer gesucht werden, deren in einer Datenbank des Systems gespeicherte Teilnehmerdaten den Suchparametern entsprechen und bei dem Teilnehmerdaten zumindest eines gefundenen Teilnehmers an den Nutzer ausgegeben werden. Darüber hinaus betrifft die Erfindung ein entsprechendes Fernsprech-Auskunftssystem. Bei den Suchparametern handelt es sich um verschiedene Suchkriterien, z. B. den Namen eines gesuchten Teilnehmers oder eine Branche, einen Spezialbereich oder den Ort bzw. um die jeweils zugehörigen Suchbegriffe, z. B. "Maier", "Ärzte", "Homöopathie", "München". Bei den Teilnehmerdaten handelt es sich in der Regel um die Telefonnummer oder aber auch die Adresse oder eine sonstige Information, die es dem Nutzer ermöglicht, mit dem gesuchten Teilnehmer in Kontakt zu treten.

Derartige Fernsprech-Auskunftssysteme sind bereits aus der Praxis bekannt. Probleme treten hierbei immer dann auf, wenn anhand der Suchparameter eine Vielzahl von Teilnehmern gefunden wird, deren Teilnehmerdaten den Suchparametern entsprechen und eine weitere Einschränkung oder Konkretisierung der Suche nicht sinnvoll oder nicht möglich ist, beispielsweise weil dem jeweiligen Nutzer weitere einschränkende Parameter nicht bekannt sind. Bei einer Abfrage in einem Fernsprech-Branchenauskunftssystem kommt dies unter anderem dann häufig vor, wenn einfach pauschal nach einem Anbieter einer bestimmten Branche, z. B. einer Bäckerei, einem Pizzadienst, einem Arzt oder einem Rechtsanwalt, innerhalb einer bestimmten Stadt gesucht wird. In vielen Fällen ist eine weitere Beschränkung der Branche nicht möglich oder sinnvoll, so dass unter Umständen sogar weit mehr als hundert Anbieter gefunden werden, die dann der Reihe nach an den Nutzer ausgegeben werden müssten. Unter Umständen wird der Nutzer die Zeit aufwenden, um sich zumindest einen Großteil der Anbieterdaten ausgeben zu lassen, um dann beispielsweise anhand der Entfernung zum jeweiligen Anbieter zu entscheiden, welchen Anbieter er aufsucht. Oftmals ist dem Nutzer aber die Zeit hierzu zu schade und er bricht die Ausgabe nach kurzer Zeit ab, so dass lediglich die zuerst genannten Anbieter tatsächlich an den jeweiligen Nutzer ausgegeben werden. Daher liegt es im Interesse der gefundenen Anbieter, möglichst frühzeitig genannt zu werden Das gleiche Probleme tritt aber auch bei einer "einfachen" Fernsprech-Auskunft, beispielsweise für Geschäfts- und Privateinträge auf, wenn der Nutzer nach einem Familiennamen oder Firmennamen fragt, welcher relativ häufig vorkommt. Auch in diesen Fällen ist in größeren Städten ggf. damit zu rechnen, dass eine sehr große Anzahl von Teilnehmern, welche dieses Suchkriterium erfüllen, gefunden wird. Selbst bei einer Einschränkung auf Firmenzusätze oder Vornamen kann dies, wenn die Firmenzusätze oder Vornamen ebenfalls häufig vorkommen, immer noch zu einer hohen Trefferzahl führen. Eine weitere Konkretisierung der Suche ist nur dann möglich, wenn der jeweilige Nutzer genauere Daten, beispielsweise die Straße oder vielleicht sogar die komplette Adresse des gesuchten Teilnehmers weiß. Dies ist leider nicht immer gegeben. Wenn der Nutzer unbedingt einen bestimmten Teilnehmer erreichen möchte, kann dies dazu führen, dass er sich sämtliche gefundene Teilnehmer ausgeben lässt und dann der Reihe nach die einzelnen Teilnehmer anruft. In diesem Fall kann es insbesondere für Privatleute recht vorteilhaft sein, möglichst spät am Ende einer Liste genannt zu werden, um eine Belästigung mit Anfragen durch Nutzer, die eigentlich einen anderen Teilnehmer mit gleichem Namen suchen, zu vermeiden. Während es bei einer Ausgabe von Anbietern einer bestimmten Branche, bei denen die Entfernung zum Nutzer wesentlich sein könnte, sinnvoll ist, eine Ausgabe der Teilnehmerdaten entsprechend der Entfernung zum Teilnehmer vorzunehmen und so eine für den Nutzer günstige und komfortable Ausgabe zu erreichen, macht eine solche Sortierung in den anderen Fällen nicht besonders viel Sinn.

Es besteht daher die Aufgabe, ein Verfahren zum Betrieb eines automatischen Fernsprech-Auskunftssystems bzw. ein entsprechendes Fernsprech-Auskunftssystem auf kostengünstige und einfach durchzuführende Weise derart zu verbessern, dass die Ausgabe der Teilnehmerdaten in einer Art erfolgt, die an die Interessen der jeweiligen Teilnehmer anpassbar ist.

Diese Aufgabe wird durch ein Verfahren gemäß Patentanspruch 1 bzw. ein automatisches Fernsprech-Auskunftssystem gemäß Patentanspruch 8 gelöst.

Erfindungsgemäß wird hierbei einem jeden in der Datenbank gespeicherten Teilnehmerdatensatz jedes Teilnehmers ein vom jeweiligen Teilnehmer vorab aus einer Mehrzahl von Prioritätswerten auswählbarer Prioritätswert zugeordnet. Das heißt, der Betreiber des Auskunftssystems legt beispielsweise Prioritätskategorien bzw. Prioritätswerte fest und der Teilnehmer wählt bei Aufnahme seines Datensatzes in die Datenbank jeweils aus, welcher Prioritätswert zu diesem Teilnehmerdatensatz gehört.

Hierbei sind auch mehrere Teilnehmerdatensätze pro Teilnehmer möglich. Beispielsweise können einem Teilnehmer, welcher sowohl als Privatperson als auch als Anbieter unter seinem Privatnamen in der Datenbank verzeichnet ist, zwei verschiedene Teilnehmerdatensätze zugeordnet sein, wobei wiederum den beiden Teilnehmerdatensätzen unterschiedliche Prioritätswerte zugeordnet sind

Anhand der Prioritätswerte wird dann bei einer Ausgabe der Teilnehmerdaten die Reihenfolge festgelegt, in der die Teilnehmerdaten der gefundenen Teilnehmer an den Nutzer ausgegeben werden. Hierdurch kann ein Teilnehmer durch Wahl einer geeigneten Prioritätskategorie beeinflussen, ob er möglichst schnell oder erst sehr spät innerhalb einer Liste von mehreren gefundenen Teilnehmern dem jeweiligen Nutzer genannt werden möchte.

Bei einem geschäftlichen Anbieter ist davon auszugehen, dass er mit möglichst hoher Priorität genannt werden möchte. Um zu vermeiden, dass jeder Anbieter den gleichen hohen Prioritätswert wählt, ist es daher hier sinnvoll, wenn die Wahl des Prioritätswerts kostenabhängig ist, d h. dass beispielsweise für die Aufnahme eines Teilnehmerdatensatzes in der Datenbank mit einer hohen Priorität der Anbieter an den Betreiber des Fernsprech-Auskunftssystems einen höheren Preis zu zahlen hat, als wenn eine niedrigere Priorität gewählt wird, da ja entsprechend der Höhe des Prioritätswerts im Durchschnitt die jeweiligen Teilnehmerdaten dieses Anbieters häufiger den Nutzern genannt werden, als Teilnehmerdaten von Anbietern, die einen niedrigeren Prioritätswert gewählt haben.

Bei Privateinträgen kann es dagegen sinnvoll sein, die Auswahl kostenunabhängig zu machen, um hier die unterschiedliche Kommunikationsbereitschaft bzw. "Störungs-Schmerzschwelle" der einzelnen Teilnehmer auszunutzen, um eine möglichst gleichmäßige Verteilung der verschiedenen Teilnehmer auf die verschiedenen Prioritätskategorien zu erreichen.

Ein erfindungsgemäßes automatisches Fernsprech-Auskunftssystem benötigt neben der Datenbank, in der die Teilnehmerdatensätze gespeichert sind, Mittel zur Eingabe von Suchparametern durch den Nutzer, eine Sucheinrichtung zum Suchen der Teilnehmer in Abhängigkeit von den Teilnehmerdaten und den Suchparametern und Mittel zur Ausgabe von Teilnehmerdaten der gefundenen Teilnehmer. Darüber hinaus ist es notwendig dass den in der Datenbank gespeicherten Teilnehmerdatensätzen jeweils ein Prioritätswert zugeordnet ist. Es muss in der Datenbank also für jeden Eintrag eine zusätzliche Prioritätskategorie-Information, d. h. der Prioritätswert, enthalten sein. Zudem wird eine Sortiereinrichtung benötigt, um die Teilnehmerdaten der gefundenen Teilnehmer in Abhängigkeit von den jeweiligen Prioritätswerten vor der Ausgabe an den Nutzer zu sortieren.

Vorzugsweise erfolgt die Abfrage der Suchparameter bzw. eine Steuerung des automatischen Fernsprech-Auskunftssystems durch den Nutzer unter Nutzung eines Nutzer-Dialogsystems. Dieses Nutzer-Dialogsystem sollte eine automatische Spracherkennung, welche die über die Telefonverbindung empfangene Sprache des Nutzers analysiert und erkennt und Mittel zur Ausgabe von Eingabeaufforderungen und/oder der Teilnehmerdaten der gefundenen Teilnehmer aufweisen. Hierbei kann es sich um eine beliebige Sprachausgabeeinrichtung, z. B. eine Sprachsyntheseeinrichtung (Sprachsynthesizer), welcher aus Bruchstücken ein gewünschtes Wort oder einen Satz zusammenstellt, oder aber auch um automatisch auswählbare, vorgespeicherte Antworten in einer Datenbank handeln. Ein solches Nutzer-Dialogsystem kann beispielsweise in Form einer Software auf einem Server realisiert sein, welche eine entsprechende geeignete Menüführung enthält und bei der beispielsweise die Spracherkennung und die Spcachausgabeeinrichtung ebenfalls in Form von Software, z. B. als Unterroutinen, enthalten sind oder welche die jeweiligen Einheiten wie Spracherkennung oder Sprachausgabeeinrichtung ansteuert. Die Steuerung kann außer mit den gesprochenen Steuerungsbefehlen auch über Tastendruck des Nutzers auf Tasten des Endgeräts, beispielsweise den bei heutigen Telefonen üblichen DTMF-Tasten (Dual Tone Multi Frequency) erfolgen. Es ist auch eine Kombination einer Steuerung über Tastendruck und Steuerungsbefehlen möglich.

In den Fällen, in denen mehrere Teilnehmer mit gleichem Prioritätswert gefunden werden, kann die Ausgabe der Teilnehmerdaten der gefundenen Teilnehmer mit gleichem Prioritätswert in alphabetischer Reihenfolge erfolgen. Wenn es sich um Einträge von Teilnehmern mit gleichem Namen handelt, ist dies jedoch nicht möglich. Hier könnten die Daten beispielsweise in aufsteigend oder absteigend sortierter Reihenfolge der Telefonnummern ausgegeben werden.

Insbesondere in den Fällen, in denen der Prioritätswert von den Eintragungskosten abhängt, ist es aber sinnvoller, eine Sortierung von Teilnehmern mit gleichem Prioritätswert in der Form vorzunehmen, dass eine möglichst gleichmäßige Gewichtung der einzelnen Teilnehmer innerhalb der gleichen Prioritätskategorie erfolgt. Dies ist beispielsweise dadurch erreichbar, dass die Ausgabe in Abhängigkeit eines ermittelten Entfernungsmaßes zwischen dem Standort des Teilnehmers und dem aktuellen Standort des Nutzers erfolgt, da davon auszugehen ist, dass die Nutzer von den unterschiedlichsten Standorten aus anrufen. Eine weitere vorteilhafte Möglichkeit besteht darin, bei der Ausgabe nach einem Zufallsprinzip zu verfahren oder beispielsweise nach einem rotierenden System in Abhängigkeit von zuvor ausgegebenen Reihenfolgen bei gleichen oder ähnlichen Anfragsn zu sortieren. In diesem Fall müssten zumindest eine Anzahl von vorherigen Abfragen in einer entsprechenden Speicheneinrichtung gespeichert werden und es werden jeweils bei einer Abfrage, bei der anhand der Suchparameter mehrere Anbieter innerhalb einer Priorität auftauchen, in dieser Datenbank die Ausgabereihenfolgen der letzten Abfragen mit den gleichen Suchparametern abgerufen und dafür gesorgt, dass nun eine andere Reihenfolge gewählt wird, als bei den vorherigen Abfragen.

Ein weiterer Nachteil der bisher bekannten automatischen Telefon-Auskunftssysteme besteht darin, dass in der Regel nur die Telefonnummer des gefragten Teilnehmers ausgegeben wird. Außerdem erfolgt die Ausgabe immer in der gleichen Form, z. B. mit der gleichen Art der Sprachausgabe, beispielsweise mittels eines Sprachsynthesizers. Bei einer besonders bevorzugten Ausführungsform des erfindungsgemäßen Verfahrens erfolgt daher eine akustische Ausgabe der Teilnehmerdaten mittels des Endgeräts des Nutzers in einer vom jeweiligen Teilnehmer vorgegebenen Form unter Nutzung der Sprachsyntheseeinrichtung oder alternativ oder zusätzlich durch Ausgabe einer in einer Speichereinrichtung hinterlegten Sound-Datei.

Der jeweilige Teilnehmer, beispielsweise ein spezieller Anbieter, kann dabei im Vorhinein auswählen, wie seine Teilnehmerdaten an einen Nutzer, d. h einen potentiellen Kunden, ausgegeben werden. Bei der Ausgabe einer voraufgenommenen Sound-Datei kann der jeweilige Teilnehmer einen beliebigen Text oder auch andere Geräusche, beispielsweise hinterlegte Musik, ausgeben lassen. Der Anbieter hat so die Möglichkeit, eine Art akustische Anzeige innerhalb des Fernsprech-Auskunftssystems zu platzieren. Neben der jeweiligen geeigneten Musik kann dabei beispielsweise ein Standardsprecher oder ein prominenter Sprecher ausgewählt werden, welcher einen gewünschten Text mit den wesentlichen Informationen spricht oder es wird eine eigene Sprachaufnahme mit dem gewünschten Text aufgenommen. Ebenso kann der Umfang der gegebenen Informationen vom Anbieter variiert werden. So kann der jeweilige Anbieter neben der Telefonnummer auch z. B. Adresse, Öffnungszeiten oder spezielle Angebote ausgeben lassen. Da die Ausgabe solcher Sound-Dateien eine höhere Akzeptanz beim Nutzer hervorruft als die maschinell wirkendere Ausgabe mittels einer Sprachsynthese, andererseits aber für die Hinterlegung der Sound-Dateien auch ein größerer Speicherbedarf besteht, bietet es sich an, die Wahl der Ausgabe von Sound-Dateien von einer Bezahlung des jeweiligen Teilnehmers an den Betreiber des Fernsprech-Auskunftssystems abhängig zu machen, wobei der zu zahlende Betrag auch von der Länge der Sound-Datei abhängen kann.

Diese wahlweise akustische Ausgabe der Teilnehmerdaten mittels Sprachsynthese oder durch Abspielen einer Sound-Datei kann beispielsweise dadurch realisiert werden, dass innerhalb eines Teilnehmerdatensatzes oder einem Teilnehmerdatensatz zugeordnet ein entsprechender Ausgabekennparameter verwendet wird, der die Ausgabeart vorgibt. Bei der Ausgabe der Teilnehmerdaten wird dann beispielsweise innerhalb des Dialogsystems dieser Ausgabekennparameter überprüft. In Abhängigkeit von diesem Parameter werden dann entweder die übermittelten Teilnehmerdaten mittels der Sprachsyntheseeinrichtung in gesprochenen Informationen für den Nutzer umgewandelt oder es wird statt dessen eine Sound-Datei aus der Datenbank aufgerufen und abgespielt. Bei diesem Ausgabekennparameter handelt es sich bei einem bevorzugten Ausführungsbeispiel um die Adresse, unter der die jeweilige Sound-Datei in der Datenbank zu finden ist. Durch eine definierte Adresse, beispielsweise "00000" oder "11111", wird dem Dialogsystem signalisiert, dass eine Umsetzung der übermittelten Teilnehmerdaten mittels der Sprachsyntheseeinrichtung in gesprochene Informationen erfolgen soll. Alternativ ist es natürlich auch möglich, die Sound-Datei direkt in die Datenbank für die Teilnehmerdatensätze zu integrieren und an die jeweiligen Teilnehmerdatensätze anzuhängen und jeweils die gesamten Daten an das Dialogsystem zu übermitteln, welches dann, wenn keine Sound-Datei angehängt ist, mittels der Sprachsyntheseeinrichtung die gefundenen auszugebenden Teilnehmerdaten in Sprachinformationen umsetzt und ansonsten nur für eine Wiedergabe der Sound-Datei sorgt. Das erstgenannte Verfahren hat jedoch den Vorteil, dass die Datenbank mit den Teilnehmerdatensätzen relativ klein gehalten werden kann und somit eine Durchsuchung der Datenbank schneller ist.

Bei einer weiteren bevorzugten Ausführungsform des erfindungsgemäßen Verfahrens besteht außerdem die Möglichkeit, beispielsweise mittels eines sogenannten "Call-Transfers" den Nutzer bei der Ausgabe der Teilnehmerdaten wahlweise, d. h auf Wunsch des Nutzers, direkt mit einem dem jeweiligen Teilnehmer zugeordneten Dialogsystem zur Abfrage weiterer Informationen zu verbinden. Ebenso ist auch eine sofortige Vermittlung des Teilnehmers direkt an den Anschluss des Teilnehmers mittels eines entsprechenden Call-Transfer-Systems möglich.

Die Möglichkeit der Weiterleitung und die dazu benötigten Informationen können ebenfalls in den Teilnehmerdatensätzen selbst abgespeichert werden, oder es findet sich hierin ein entsprechender Marker, welcher auf die Möglichkeit der Weiterleitung an den Anschluss des Teilnehmers bzw. ein separates Dialogsystem des Teilnehmers hinweist und/oder eine Adresse angibt, unter der die notwendigen Informationen für die Weiterleitung hinterlegt sind

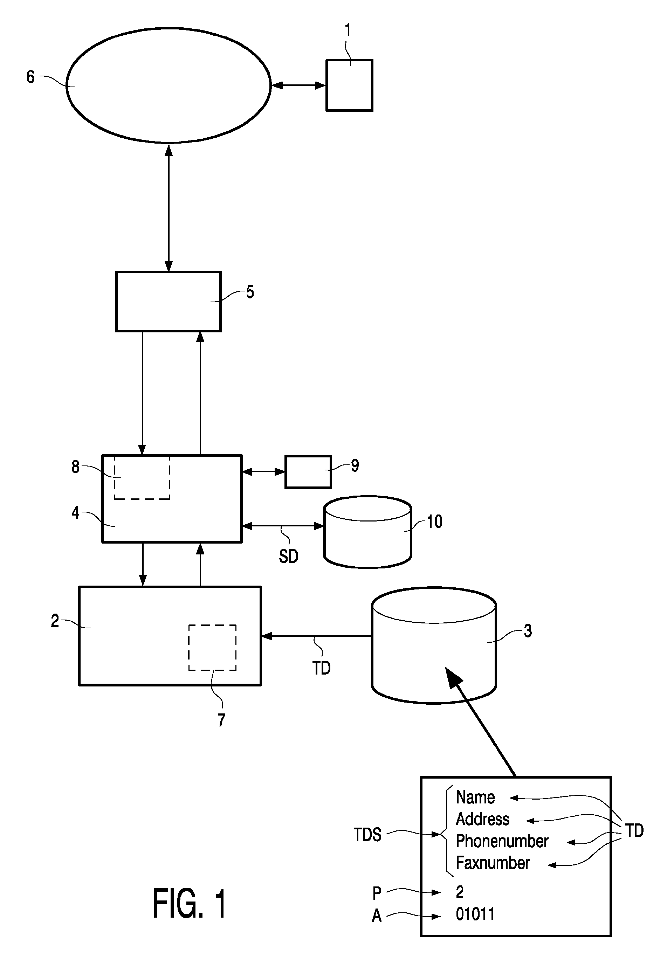

Die Erfindung wird im Folgenden unter Hinweis auf die beigefügte Figur anhand eines Ausführungsbeispiels näher erläutert. Die nachfolgend dargestellten Merkmale und die bereits oben beschriebenen Merkmale können nicht nur in den genannten Kombinationen, sondern auch einzeln oder in anderen Kombinationen erfindungswesentlich sein.

Die einzige Figur zeigt eine schematische Anordnung eines Ausführungsbeispiels des erfindungsgemäßen Fernsprech-Auskunftssystems, welches von einem Endgerät 1 eines Nutzers über ein Telefonnetz 6 und eine Telefonnetz-Anschlussstelle 5 des Fernsprech-Auskunftssystems erreicht werden kann. Bei dem Endgerät 1 des Nutzers handelt es sich in der Regel um ein übliches Festnetz- oder Mobilfunktelefon. Es kann sich aber auch über ein beliebiges anderes Gerät mit einer entsprechenden Telefonfunktion, beispielsweise um einen PC oder einen Organizer oder ähnliches, handeln.

Das Fernsprech-Auskunftssystem weist zunächst zur Kommunikation mittels Sprache mit dem Nutzer ein Nutzer-Dialogsystem 4 auf, in welches eine Spracherkennung 8 integriert ist. Mittels dieser Spracherkennung 8 werden die von der Telefonnetz-Anschlussstelle 5 weitergeleiteten Sprachinformationen des Nutzers, beispielsweise Steuerungsbefehle oder die Such-Parameter, in eine maschinenlesbare Information bzw. eine Textinformation umgesetzt. Diese Daten werden dann an eine Sucheinrichtung 2, beispielsweise einen mit einer geeigneten Software ausgestatteten Server weitergeleitet. Die Sucheinrichtung 2 sucht dann aus einer Datenbank 3, in der die verschiedenen Teilnehmerdatensätze TDS der verschiedenen Teilnehmer gespeichert sind, die Teilnehmer raus, deren Teilnehmerdatensätze TDS den vom Nutzer vorgegebenen Suchparametern entsprechen, d. h. bei denen die entsprechenden Teilnehmerdaten mit den Suchparametern die notwendige Übereinstimmung aufweisen.

An die Teilnehmerdatensätze TDS in der Datenbank 3 ist außerdem noch ein Prioritätswert P sowie ein Ausgabekennparameter A angehängt. Der Prioritätswert P gibt an, mit welcher Priorität die Teilnehmerdaten TD dieses Teilnehmers ausgegeben werden, wenn anhand der vorgegebenen Suchparameter des Nutzers mehrere Teilnehmer gefunden werden. Der Ausgabekennparameter A gibt an, in welcher Form die Teilnehmerdaten TD des jeweiligen Teilnehmers ausgegeben werden.

Zur Sortierung der Teilnehmerdaten für die Ausgabe an den Nutzer weist die Sucheinrichtung 2 eine Sortiereinrichtung 7 auf, die die Teilnehmerdaten TD anhand der Prioritätswerte P sortiert. Sind mehreren der gefundenen Teilnehmern die gleichen Prioritätswerte P zugeordnet, so folgt eine Sortierung innerhalb der Teilnehmer mit gleichem Prioritätswert P nach einem Zufallsprinzip. Die Sortiereinrichtung 7, kann ebenfalls als Software auf dem Rechner installiert sein, welcher die Sucheinrichtung 2 enthält. Es kann sich hierbei auch um eine Unterroutine innerhalb der Suchsoftware handeln.

Die Ausgabe der Teilnehmerdaten TD, aber auch die Ausgabe von Eingabeaufforderungen, beispielsweise eine Aufforderung zur Eingabe von Steuerungsbefehlen oder von Suchparametern, erfolgt wiederum über das Dialogsystem 4, welches jeweils geeignete Sprachsequenzen generiert, die über die Tdefonnetz-Anschlussstelle 5 und das Telefonnetz 6 am Endgerät 1 des Nutzers ausgegeben werden.

Das Nutzer-Dialogsystem 4 ist hierzu mit einer Sprachsyntheseeinrichtung 9 verbunden, welche aus Sprachbruchstücken die auszugebenden maschinenlesbaren Informationen bzw. Textinformationen in Sprachinformationen umwandelt.

Außerdem ist das Nutzer-Dialogsystem 4 mit einer Datenbank 10 verbunden, welche Sound-Dateien SD für verschiedene Teilnehmer enthält. Bei der Ausgabe von Teilnehmerdaten TD werden von der Sucheinrichtung 2 an das Dialogsystem 4 zusammen mit den Teilnehmerdaten TD die zugehörigen Ausgabekennparameter Aübermittelt, bei denen es sich beispielsweise um Adressen handelt, unter denen die zugehörigen Sound-Dateien SD in der Datenbank 10 zu finden sind Anhand dieser Adressen werden dann die entsprechenden Sound-Dateien SD aus der Datenbank 10 abgefragt und über die Telefonnetz-Anschlussstelle 5, das Telefonnetz 6 und das Endgerät 1 dem anfragenden Nutzer abgespielt. Sofern unter der jeweiligen Adresse keine Sound-Datei zu finden ist bzw. wenn es sich um eine vorgegebene Adresse, beispielsweise eine "00000" handelt, oder wenn gar kein Ausgangskennparameter Aübermittelt wird, werden die übermittelten Teilnehmerdaten TD, beispielsweise Name und Telefonnummer, mittels der Sprachsyntheseeinrichtung 9 in Sprachinformationen zur Ausgabe an den Nutzer umgewandelt.

Sofern eine Sound-Datei SD abgespielt werden soll, reicht es im Prinzip auch aus, wenn von der Sucheinrichtung 2 lediglich der die Adresse der Sound-Datei in der Datenbank 10 enthaltende Ausgabekennparameter Aübermittelt wird. Eine Übermittlung der in der Datenbank 3 enthaltenen sonstigen Teilnehmerdaten TD wie Name und Adresse und Telefonnummer ist dann nicht erforderlich, da diese Informationen ja ohnehin in der Sound-Datei SD verpackt sind

Neben der Sucheinrichtung 2 und der Sortiereinrichtung 7 können auch das Nutzer-Dialogsystem 4 mit der Spracherkennung 8 und die Sprachsyntheseeinrichtung 9 sowie die zugehörigen Datenbanken 3 und 10, zu einem großen Teil als Sortware, innerhalb eines einzelnen Servers integriert sein.

Das Verfahren hat besonderen Nutzen für Firmen, die damit die Möglichkeit erhalten, ihr individuelles Angebot innerhalb eines Fernsprech-Branchenauskunftssystems zusammenzustellen und insbesondere die Ausgabe ihrer Teilnehmerdaten an potentielle Kunden durch das Fernsprech-Auskunftssystem an das jeweilige Firmenkonzept anzupassen. Der Betreiber eines solchen Fernsprech-Auskunftssystems kann den Teilnehmern ein größeres Angebot unterbreiten. Dieses Angebot enthält auch die Möglichkeit, mit dem zusätzlichen Service entsprechend zusätzliche Bezahlungsn zu fordern oder auch eine Abgrenzung zu Mitbewerbern durch eine Individualisierung des Fernsprech-Auskunftssystems zu erreichen.

## Patentansprüche

1. Verfahren zum Betrieb eines automatischen Fernsprech-Auskunftssystems, bei welchem anhand von Suchparametern, die mittels eines Endgeräts (1) eines Nutzers an das System übermittelt werden, Teilnehmer gesucht werden, deren in einer Datenbank (3) des Systems gespeicherte Teilnehmerdaten (TD) den Suchparametern entsprechen, und bei dem Teilnehmerdaten (TD) zumindest eines gsfundenen Teilnehmers an den Nutzer ausgegeben werden,
**dadurch gekennzeichnet,**
**dass** einem jeden in der Datenbank (3) gespeicherten Teilnehmerdatensatz (TDS) jedes Teilnehmers ein vom jeweiligen Teilnehmer aus einer Mehrzahl von Prioritätswerten auswählbarer Prioritätswert (P) zugeordnet ist,
und die Reihenfolge der Ausgabe der Teilnehmerdaten (TD) der gefundenen Teilnehmer an den Nutzer in Abhängigkeit von den jeweiligen Teilnehmern zugeordneten Prioritätswerten (P) erfolgt.

2. Verfahren nach Anspruch 1,
**dadurch gekennzeichnet,**
**dass** die Abfrage der Suchparameter und/oder eine Steuerung des automatischen Fernsprech-Auskunftssystems durch den Nutzer unter Nutzung eines Nutzer-Dialogsystems (4) mit einer automatischen Spracherkennung (8) und mit Mitteln (9, 10) zur Ausgabe von Eingabeaufforderungen und/oder von Teilnehmerdaten (TD) der gefundenen Teilnehmer erfolgt.

3. Verfahren nach Anspruch 1 oder 2,
**dadurch gekennzeichnet,**
**dass** die Reihenfolge der Ausgabe von Teilnehmerdaten (TD) von gefundenen Teilnehmern mit gleichem Prioritätswert (P) in Abhängigkeit eines ermittelten Entfernungsmaßes zwischen dem Standort des Teilnehmers und dem aktuellen Standort des Nutzers erfolgt.

4. Verfahren nach Anspruch 1 oder 2,
**dadurch gekennzeichnet,**
**dass** die Reihenfolge der Ausgabe von Teilnehmerdaten (TD) von gefundenen Teilnehmern mit gleichem Prioritätswert (P) nach einem Zufallsprinzip und/oder in Abhängigkeit von Ausgabereihenfolgen bei vorhergehenden Abfragen des Fernsprech-Auskunftssystems erfolgt.

5. Verfahren nach einem der Ansprüche 1 bis 4,
**dadurch gekennzeichnet,**
**dass** eine akustische Ausgabe der Teilnehmerdaten mittels des Endgeräts des Nutzers in einer vom jeweiligen Teilnehmer vorgegebenen Form unter Nutzung einer Sprachsyntheseeinrichtung (9) und/oder durch Ausgabe einer in einer Speichereinrichtung (10) hinterlegten Sound-Datei (SD) erfolgt.

6. Verfahren nach Anspruch 5,
**dadurch gekennzeichnet,**
**dass** den Teilnehmerdatensätzen (TDS) in der Datenbank (3) ein Ausgabe-Kennparameter (A) zugeordnet ist, welcher vorgibt, ob die akustische Ausgabe der Teilnehmerdaten unter Nutzung der Sprachsyntheseeinrichtung (9) und/oder durch eine Ausgabe einer in der Speichereinrichtung (10) hinterlegten Sound-Datei (SD) erfolgt.

7. Verfahren nach einem der Ansprüche 1 bis 6,
**dadurch gekennzeichnet,**
**dass** der Nutzer wahlweise bei der Ausgabe der Teilnehmerdaten direkt mit einem dem jeweiligen Teilnehmer zugeordneten Dialogsystem zur Abfrage weiterer Informationen verbunden wird

8. Automatisches Fernsprech-Auskunftssystem, welches zur Benutzung mit einem Endgerät (1) eines Nutzers verbunden ist, mit
einer Datenbank (3), in der Teilnehmerdatensätze (TDS) einer Vielzahl von Teilnehmern gespeichert sind,
mit Mitteln (1, 6, 5, 4, 8) zur Eingabe von Suchparametern durch den Nutzer
mit einer Sucheinrichtung (2) zum Suchen von Teilnehmern, deren Teilnehmerdaten (TD) den Suchparametern entsprechen,
und mit Mitteln (4, 10, 9, 5, 6, 1) zur Ausgabe von Teilnehmerdaten (TD) zumindest eines gefundenen Teilnehmers,
**gekennzeichnet durch** den in der Datenbank (3) gespeicherten Teilnehmerdatensätzen (TDS) jeweils zugeordnete Prioritätswerte (P)
und eine Sortiereinrichtung (7), um die Teilnehmerdaten (TD) der gefundenen Teilnehmer in Abhängigkeit von den jeweils zugehörigen Prioritätswerten (P) zur Ausgabe an den Nutzer zu sortieren.

9. System nach Anspruch 8,
**gekennzeichnet durch** ein Nutzer-Dialogsystem (4) zur Steuerung des automatisches Fernsprech-Auskunftssystems **durch** den Nutzer und zur Abfrage der Suchparameter, mit einer automatischer Spracherkennung (8) und mit Mitteln (9, 10) zur Ausgabe von Eingabeaufforderungen und/oder von Teilnehmerdaten (TD) der gefundenen Teilnehmer.

10. System nach Anspruch 8 oder 9,
**gekennzeichnet durch** eine Sprachsyntheseeinrichtung (9) zur Ausgabe von Teilnehmerdaten (TD) und eine Speichereinrichtung (10) zur Speicherung von verschiedenen Teilnehmern zugeordneten Sound-Dateien (SD), welche Teilnehmerdaten des jeweiligen Teilnehmers enthalten.

11. System nach einem der Ansprüche 8 bis 10,
gakennzeichnet durch Mittel, um den Nutzer wahlweise bei der Ausgabe der Teilnehmerdaten direkt mit einem dem jeweiligen Teilnehmer zugeordneten Dialogsystem zur Abfrage weiterer Informationen zu verbinden.
